# EUROPEAN PATENT APPLICATION

(11) **EP 4 847 980 A1**
(43) Date of publication of application: **02.12.2026**
(21) Application number: 26162526.3
(22) Date of filing: 05.03.2026
(51) Int. Cl.: G02B 6/38

(54) **COMPACT OPTICAL FIBER CONNECTOR**

(30) Priority: 28.05.2025 CN 202521071755 U
(71) Applicant: AMPHENOL TECHNOLOGY VIETNAM CO., LTD., 850000 Can Giuoc (VN)
(72) Inventor: NGUYEN, PHU THANH, 850000 Can Giuoc Town (VN); NGUYEN, TRUONG BAO HUY, 850000 Can Giuoc Town (VN); VU, MINH HAI, 850000 Can Giuoc Town (VN); NGUYEN, CAT VIEN, 850000 Can Giuoc Town (VN)
(74) Representative: Studio Torta S.p.A.

(57) **Abstract**

A compact optical fiber connector includes: a front housing, a rear housing, and a ferrule component. An outer wall of the front housing extends axially to form a positioning flat surface to assist in positioning direction when the compact optical fiber connector is connected to an adapter. A rear-housing front end of the rear housing extends into the front housing and is connected to the front housing, and a rear-housing rear end of the rear housing is fastened to an optical cable and allows an optical fiber inside the optical cable to pass through the rear-housing rear end. The ferrule component is fixed between the front housing and the rear housing, one end of the ferrule component extends out of the front housing to be connected to the adapter, and the other end of the ferrule component extends into the rear housing to be connected to the optical fiber.

## Description

### CROSS-REFERENCE TO RELATED APPLICATIONS

The present application claims priority to Chinese Patent Application No. 202521071755.0, filed on May 28, 2025, the content of all of which is incorporated herein by reference.

### TECHNICAL FIELD

The present disclosure relates to the technical field of optical fiber connectors, in particularly to a compact optical fiber connector that is easy to be quickly assembled to and disassembled from an adapter and has a small footprint.

### BACKGROUND

With the increasing demand for fast Internet to individual households, fiber-to-the-X (FTTX), especially fiber-to-the-home (FTTH), is an important development direction of the prior art. In order to meet the demand for FTTX, how to balance the reliability and installation difficulty of optical fiber connectors has become an urgent problem to be solved. In the prior art, a standard connector used to reduce the installation difficulty of optical fiber connectors has a small footprint and is easy for disassembly and assembly, but cannot prevent dust and water because the standard connector does not have a sealing structure, causing inconvenience for outdoor use. In order to ensure a sealing effect, an optical fiber connector with a specific sealing structure is adopted which is generally connected to an adapter by means of threads. But the optical fiber connector requires adequate rotation to be correctly matched with the adapter, which increases the installation difficulty.

Therefore, the prior art needs to be further improved and enhanced.

### SUMMARY

In view of the above-mentioned defects of the prior art, the present disclosure provides a compact optical fiber connector to solve the problem that the optical fiber connectors in the prior art cannot balance reducing the installation difficulty, reducing the footprint, and ensuring the sealing to prevent dust and water.

According to the above technical problem, the present disclosure provides a compact optical fiber connector, including:
a front housing, where an outer wall of the front housing extends axially to form a positioning flat surface to assist in positioning direction when the compact optical fiber connector is connected to an adapter;
a rear housing, where a rear-housing front end of the rear housing extends into the front housing and is connected to the front housing, and a rear-housing rear end of the rear housing is fastened to an optical cable and allows an optical fiber inside the optical cable to pass through the rear-housing rear end; and
a ferrule component, fixed between the front housing and the rear housing, where one end of the ferrule component extends out of the front housing to be connected to the adapter, and an other end of the ferrule component extends into the rear housing to be connected to the optical fiber.

In some embodiments, the front housing includes:

a front-housing front end, matched with and fastened to the adapter to realize a connection between the compact optical fiber connector and the adapter, where the positioning flat surface is arranged at one side of the front-housing front end; and
a front-housing rear end, matched with the rear-housing front end of the rear housing, so that the rear-housing front end extends into the front-housing rear end to realize a detachable connection between the rear housing and the front housing.

In some embodiments, an annular snap-fit protrusion is arranged inside the front-housing front end, and after the front housing and the rear housing are detachably connected, the ferrule component is fixed between the annular snap-fit protrusion and the rear-housing front end.

In some embodiments, at least one fastening protrusion is arranged on a side wall of the front-housing front end surrounding the front-housing front end to realize matching and fastening between the front-housing front end and the adapter.

In some embodiments, the rear-housing rear end includes:
an annular groove, arranged around an outer wall of the rear-housing rear end, where a waterproof ring is sleeved inside the annular groove; and
a fastening portion, arranged at an end part of the rear-housing rear end away from the rear-housing front end to realize a fastening connection between the fastening portion and the optical cable.

In some embodiments, the compact optical fiber connector further includes:
a crimping tube, where one end of the crimping tube is fixedly sleeved on the fastening portion, and an other end of the crimping tube is clamped on the optical cable to ensure a fixed connection between the optical cable and the compact optical fiber connector.

In some embodiments, the compact optical fiber connector further includes:
a first dust cover, detachably connected to the rear housing, and wrapping the front housing and the rear housing, where an inner wall of the first dust cover is matched with the waterproof ring to prevent dust or water from entering into the compact optical fiber connector after the first dust cover is connected to the rear housing.

In some embodiments, the first dust cover is arranged with a push-pull through hole configured for movement of the compact optical fiber connector and assembly and disassembly of the first dust cover.

In some embodiments, the ferrule component includes:
a ferrule, where one end of the ferrule extends out of the front housing to be connected to the adapter, and an other end of the ferrule extends into the rear housing to be connected to the optical fiber, and the optical fiber is connected to the adapter through the ferrule;
a convex stage, arranged around the ferrule, where one side of the convex stage abuts against the front housing; and
an elastic member, where one end of the elastic member abuts against an other side of the convex stage, and an other end of the elastic member abuts against the rear housing, so as to ensure that the ferrule component is fixed between the front housing and the rear housing, and avoid damage to the ferrule caused by collision between the ferrule and the adapter.

In some embodiments, the compact optical fiber connector further includes:
a second dust cover, arranged corresponding to the one end of the ferrule component extending out of the front housing, and detachably sleeved on the ferrule component to prevent dust from falling into the ferrule component.

The present disclosure provides a compact optical fiber connector, including: a front housing, a rear housing, and a ferrule component. An outer wall of the front housing extends axially to form a positioning flat surface to assist in positioning direction when the compact optical fiber connector is connected to an adapter. A rear-housing front end of the rear housing extends into the front housing and is connected to the front housing, and a rear-housing rear end of the rear housing is fastened to an optical cable and allows an optical fiber inside the optical cable to pass through the rear-housing rear end. The ferrule component is fixed between the front housing and the rear housing, one end of the ferrule component extends out of the front housing to be connected to the adapter, and the other end of the ferrule component extends into the rear housing to be connected to the optical fiber. The present disclosure reduces the footprint by reducing structural components and using the front housing and the rear housing to form the optical fiber connector. The positioning flat surface is arranged on the front housing to reduce the installation difficulty. Finally, the ferrule component is fixed inside the front housing and the rear housing to prevent dust or water droplets from entering into the compact optical fiber connector, thereby synchronously achieving the effects of reducing volume, reducing installation difficulty, and ensuring dustproof and waterproof functions.

### BRIEF DESCRIPTION OF DRAWINGS

In order to provide a clearer explanation of the technical solutions in the embodiments of the present disclosure or in the prior art, a brief description is given to the accompanying drawings required for the description of the present embodiments or the prior art. It is obvious that the accompanying drawings described below are only some embodiments of the present disclosure. For those skilled in the art, other drawings can be obtained based on the present drawings without creative efforts.
FIG. 1 is a schematic diagram of a perspective view of a compact optical fiber connector in a first embodiment of the present disclosure.
FIG. 2 is a schematic diagram of a perspective view of the compact optical fiber connector without a first dust cover and a second dust cover in the first embodiment of the present disclosure.
FIG. 3 is a schematic diagram of a cross-sectional view of the compact optical fiber connector in the first embodiment of the present disclosure.
FIG. 4 is a schematic diagram of an exploded view of the compact optical fiber connector in the first embodiment of the present disclosure.
FIG. 5 is a schematic diagram of an exploded view of the compact optical fiber connector from another angle in the first embodiment of the present disclosure.
FIG. 6 is a schematic diagram of a perspective view of a front housing of the compact optical fiber connector in the first embodiment of the present disclosure.
FIG. 7 is a schematic diagram of a perspective view of the front housing of the compact optical fiber connector from another angle in the first embodiment of the present disclosure.
FIG. 8 is a schematic diagram of a perspective view of a rear housing without a waterproof ring of the compact optical fiber connector in the first embodiment of the present disclosure.
FIG. 9 is a schematic diagram of a perspective view of the rear housing with the waterproof ring of the compact optical fiber connector from another angle in the first embodiment of the present disclosure.
FIG. 10 is a schematic diagram of a perspective view of a compact optical fiber connector without a first dust cover and a second dust cover in a second embodiment of the present disclosure.
FIG. 11 is a schematic diagram of a cross-sectional view of the compact optical fiber connector in the second embodiment of the present disclosure.
FIG. 12 is a schematic diagram of an exploded view of the compact optical fiber connector in the second embodiment of the present disclosure.
FIG. 13 is a schematic diagram of a perspective view of a front housing of the compact optical fiber connector in the second embodiment of the present disclosure.
FIG. 14 is a schematic diagram of a perspective view of a rear housing with a waterproof ring of the compact optical fiber connector in the second embodiment of the present disclosure.

### DETAILED DESCRIPTION OF EMBODIMENTS

The present disclosure provides a compact optical fiber connector. In order to make the purposes, technical solutions, and effects of the present disclosure clearer and more specific, the following provides a further detailed explanation of the present disclosure. It should be understood that the embodiments described here are only used to explain the present disclosure and are not intended to limit the present disclosure.

It should be noted that the terms "center", "up", "down", "left" , "right", "inside", "outside", "perpendicular", "horizontal" and other directional or positional relationships indicated are based on the directional or positional relationships shown in the accompanying drawings, only for the convenience of describing the present disclosure and simplifying the description, and do not indicate or imply that the structure referred to must have a specific orientation or must be constructed in a specific orientation, and cannot be understood as limiting the present disclosure.

In addition, unless there are special limitations on articles in the specification otherwise, "a", "an", "said", and "the" can refer to one or more than one. If there are descriptions related to "first", "second", etc. in the embodiments of the present disclosure, the descriptions of "first", "second", etc. are only for descriptive purposes and cannot be understood as indicating or implying their relative importance or implying the number of technical features indicated. Therefore, the features that are limited to "first", "second", etc. can explicitly or implicitly include at least one of these features. In addition, the technical solutions between various embodiments can be combined with each other, but they must be based on the ability of those skilled in the art to implement them. When the combination of technical solutions is contradictory or impossible to achieve, it should be considered that this combination of technical solutions does not exist and is not within the protection scope required by the present disclosure.

Those skilled in the art can understand that, unless otherwise defined, all terms used here (including technical and scientific terms) have the same meaning as those generally understood by those skilled in the art to which the present disclosure belongs. It should be understood that terms such as those defined in general dictionaries should be understood to have meanings consistent with those in the prior art. Unless specifically defined as here otherwise, the terms are not explained with idealized or overly formal meanings.

With the increasing demand for fast Internet to individual households, the demand for the reliability and ease of installation of optical fiber connectors increases. In the prior art, a standard connector is widely used in FTTX, but is inconvenient for outdoor use due to that the standard connector has a small footprint and no sealing structures. Compared with the standard connector, an H-plug has a larger size and a better sealing effect, which is designed especially for outdoor use, but this type of connector is matched with a socket or an adapter by means of a threaded connection. This matching method requires adequate rotation to make this type of connector to be correctly matched with a thread of the adapter or the socket to ensure good sealing and a stable optical connection, which has installation difficulty and is not conducive to the installation of multiple optical fibers in dense environments.

The present disclosure provides a compact optical fiber connector to solve the problem that the optical fiber connectors in the prior art cannot balance reducing the installation difficulty, reducing the footprint, and ensuring the sealing to prevent dust and water. The compact optical fiber connector has a quick and reliable matching mechanism, and is smaller in size, thereby shortening the installation duration and reducing the footprint, allowing for the installation of more connectors in a limited space. At the same time, a ferrule component is sealed inside a front housing and a rear housing, thereby ensuring waterproof and dustproof functions.

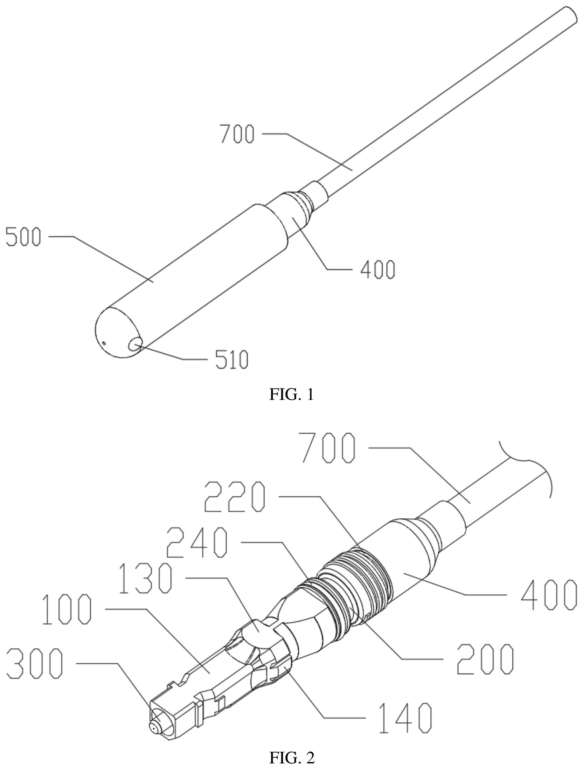

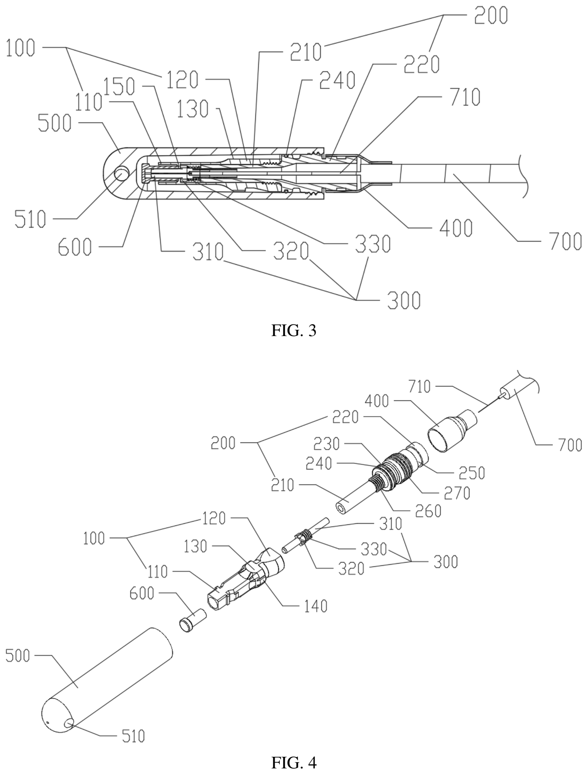

As shown in FIG. 2 and FIG. 3, the compact optical fiber connector includes a front housing 100, a rear housing 200, and a ferrule component 300. An outer wall of the front housing 100 extends axially to form a positioning flat surface 130 to assist in positioning direction when the compact optical fiber connector is connected to an adapter. A rear-housing front end 210 of the rear housing 200 extends into the front housing 100 and is connected to the front housing 100. Optionally, the rear-housing front end 210 extends into the front housing 100 and is detachably connected to the front housing 100, or the rear-housing front end 210 extends into the front housing 100 and is non-detachably fastened to the front housing 100, or the rear-housing front end 210 extends into the front housing 100 and is integrated with the front housing 100. Furthermore, a rear-housing rear end 220 of the rear housing 200 is fastened to an optical cable 700 and allows an optical fiber 710 inside the optical cable 700 to pass through the rear-housing rear end 220. The ferrule component 300 is fixed between the front housing 100 and the rear housing 200, with one end of the ferrule component 300 extending out of the front housing 100 to be connected with the adapter, and the other end of the ferrule component 300 extending into the rear housing 200 to be connected with the optical fiber 710. The present disclosure reduces the footprint by reducing structural components and using the front housing and the rear housing to form the optical fiber connector. The positioning flat surface is arranged on the front housing to reduce the installation difficulty. Finally, the ferrule component is fixed inside the front housing and the rear housing, dust is prevented from entering into the compact optical fiber connector through a first dust cover 500 and a second dust cover 600, and water droplets are prevented from entering into the compact optical fiber connector through a waterproof ring 240, thereby synchronously achieving the effects of reducing volume, reducing installation difficulty, and ensuring dustproof and waterproof functions.

Furthermore, as shown in FIG. 3 and FIG. 4, the front housing 100 includes a front-housing front end 110 and a front-housing rear end 120. The front-housing front end 110 is matched with and fastened to the adapter to realize a connection between the compact optical fiber connector and the adapter. The positioning flat surface 130 is arranged on one side of the front-housing front end 110. The front-housing rear end 120 is matched with the rear-housing front end 210 of the rear housing 200, so that the rear-housing front end 210 extends into the front-housing rear end 120 to realize a detachable connection between the rear housing 200 and the front housing 100. By the front-housing rear end 120 being sleeved on and detachably connected to the rear-housing front end 210, a fixed connection between the front housing 100 and the rear housing 200 can be realized, ensuring a compact structure and reducing installation difficulty. In one implementation, the front-housing rear end 120 and the rear-housing front end 210 are sleeved together and integrally formed, thereby realizing the fixed connection between the front housing 100 and the rear housing 200.

Furthermore, as shown in FIG. 3, an annular snap-fit protrusion 150 is arranged inside the front-housing front end 110. After the front housing 100 is detachably connected to the rear housing 200, the ferrule component 300 is fixed between the annular snap-fit protrusion 150 and the rear-housing front end 210. Using the annular snap-fit protrusion 150 being matched with the rear-housing front end 210 to snap-fit and fix the ferrule component 300, ensures that the ferrule component 300 is fixed between the front housing 100 and the rear housing 200.

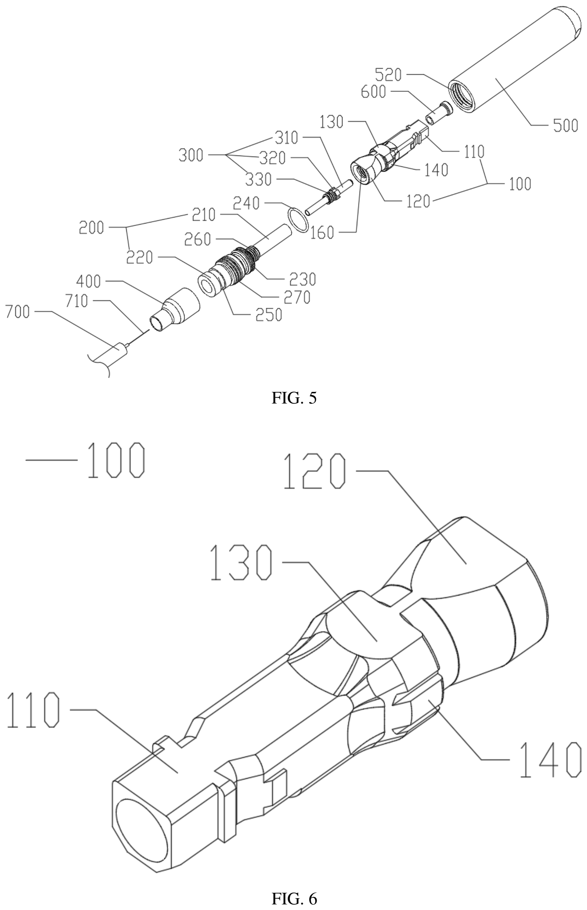

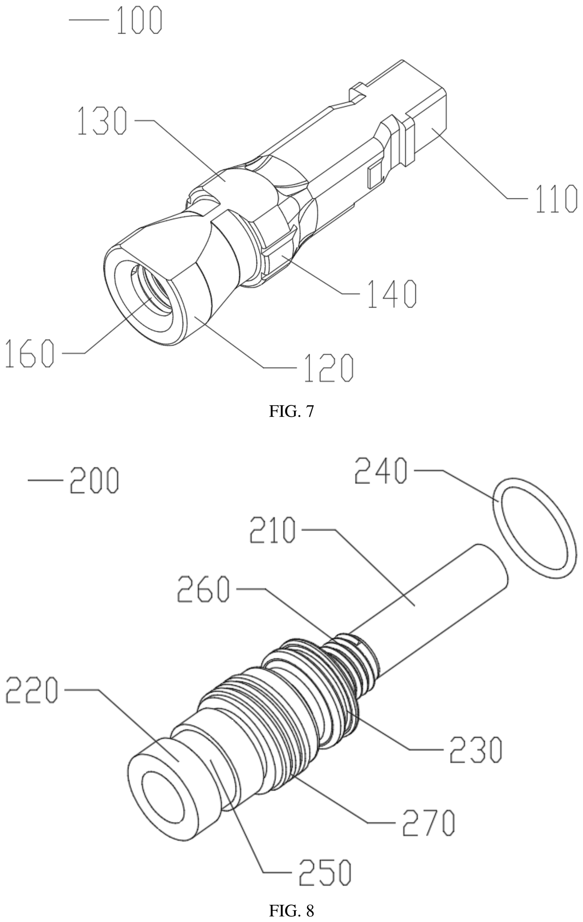

Furthermore, as shown in FIG. 6 and FIG. 7, at least one fastening protrusion 140 is arranged on a side wall of the front-housing front end 110 surrounding the front-housing front end 110 to realize matching and fastening between the front-housing front end 110 and the adapter.

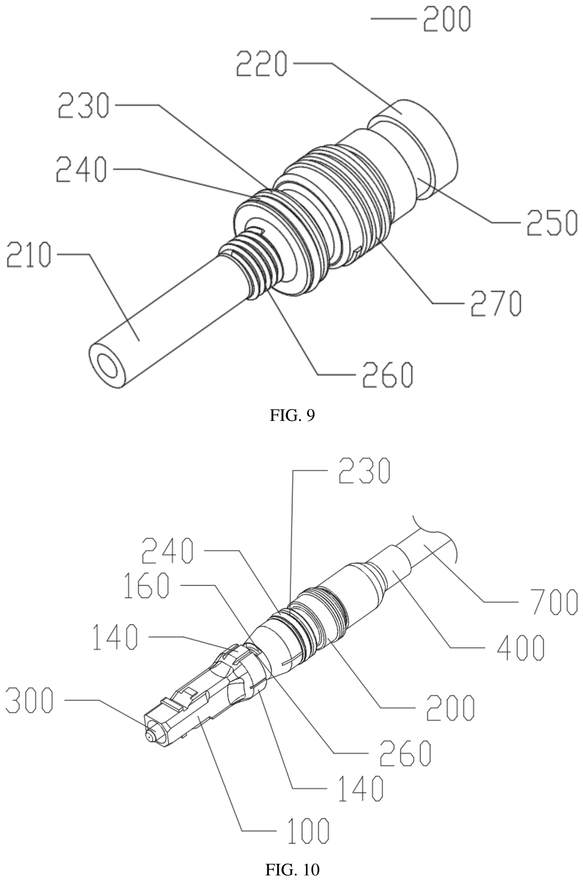

Furthermore, as shown in FIG. 8 and FIG. 9, the rear-housing rear end 220 includes an annular groove 230 and a fastening portion 250. The annular groove 230 is arranged around an outer wall of the rear-housing rear end 220, and a waterproof ring 240 is sleeved on and inside the annular groove 230. The fastening portion 250 is arranged at an end part of the rear-housing rear end 220 away from the rear-housing front end 210 to realize a fastening connection between the fastening portion and the optical cable 700. The waterproof ring 240 arranged inside the annular groove 230 provides a waterproof effect for the compact optical fiber connector, and sealing of the compact optical fiber connector is improved by the fastening connection between the fastening portion 250 and the optical cable 700. After inserting the compact optical fiber connector into the adapter, the waterproof ring 240 abuts against a housing of the adapter, thereby achieving the waterproof function of the compact optical fiber connector. When the compact optical fiber connector is pulled out of the adapter and stopped from use, the compact optical fiber connector is covered by a dust cover, so that the waterproof ring 240 cooperates with the dust cover to achieve the waterproof and dustproof functions of the compact optical fiber connector.

Furthermore, as shown in FIG. 4 and FIG. 5, the compact optical fiber connector further includes a crimping tube 400. One end of the crimping tube 400 is fixedly sleeved on the fastening portion 250, and the other end of the crimping tube 400 is fixedly clamped on the optical cable 700 to ensure a fixed connection between the optical cable 700 and the compact optical fiber connector. By tightly wrapping the optical cable 700 with the crimping tube 400, a reinforcing component (such as aramid yarns) of the optical cable 700 is fixed inside the rear housing 200, thereby achieving tensile and waterproof functions and ensuring a stable connection of the optical fiber 710.

Furthermore, as shown in FIG. 1 and FIG. 4, the compact optical fiber connector further includes the first dust cover 500, which is detachably connected to the rear housing 200 and wraps the front housing 100 and the rear housing 200. As shown in FIG. 3, an inner wall of the first dust cover 500 is matched with the waterproof ring 240 to prevent dust or water from entering into the compact optical fiber connector through both the first dust cover 500 and the waterproof ring 240 after connecting the first dust cover 500 to the rear housing 200. By the first dust cover 500 cooperating with the waterproof ring 240, the sealing of the compact optical fiber connector is improved.

Furthermore, as shown in FIG. 1 and FIG. 5, a push-pull through hole 510 is arranged on the first dust cover 500 to facilitate the movement of the compact optical fiber connector and the disassembly and assembly of the first dust cover 500.

Furthermore, as shown in FIG. 4 and FIG. 5, the ferrule component 300 includes a ferrule 310, a convex stage 320, and an elastic member 330. One end of the ferrule 310 extends out of the front housing 100 to be connected with the adapter, and the other end of the ferrule 310 extends into the rear housing 200 to be connected with the optical fiber 710. The optical fiber 710 is connected to the adapter through the ferrule 310. The convex stage 320 is arranged around the ferrule 310, and one side of the convex stage 320 abuts against the front housing 100. One end of the elastic member 330 abuts against the other side of the convex stage 320, and the other end of the elastic member 330 abuts against the rear housing 200 to ensure that the ferrule component 300 is fixed between the front housing 100 and the rear housing 200, and to avoid damage to the ferrule 310 caused by collision between the ferrule 310 and the adapter. By setting the elastic member 330, it is ensured that a force extending towards the adapter is throughout provided to the ferrule 310, thereby ensuring that the ferrule 310 extends out of the front housing 100 and is connected to the adapter, while avoiding damage to the ferrule 310 caused by rigid collision during a insertion-connection process.

Furthermore, as shown in FIG. 3 and FIG. 4, the compact optical fiber connector further includes the second dust cover 600, which is arranged corresponding to the one end of the ferrule component 300 extending out of the front housing 100 and is detachably sleeved on the ferrule component 300 to prevent dust from falling into the ferrule component 300. By additionally setting the second dust cover 600, further sealing on the ferrule component 300 is achieved, thereby ensuring the dustproof effect of the compact optical fiber connector.

The present disclosure reduces the footprint by reducing structural components and using the front housing 100 and the rear housing 200 to form the optical fiber connector. The positioning flat surface 130 is arranged on the front housing 100 to reduce installation difficulty. Finally, the ferrule component 300 is fixed inside the front housing 100 and the rear housing 200, dust is prevented from entering into the compact optical fiber connector through the first dust cover 500 and the second dust cover 600, and water droplets are prevented from entering into the compact optical fiber connector through the waterproof ring 240, thereby synchronously achieving the effects of reducing volume, reducing installation difficulty, and ensuring dustproof and waterproof functions.

The following illustrates an embodiment of the present disclosure in conjunction with the accompanying drawings.

In the present embodiment, as shown in FIG. 3, the present disclosure discloses a compact optical fiber connector, including a front housing 100, a rear housing 200, a ferrule component 300, a crimping tube 400, a first dust cover 500, and a second dust cover 600.

As shown in FIG. 3 and FIG. 6, the front housing 100 is a hollow housing structure, having a front-housing front end 110 and a front-housing rear end 120. An optical fiber 710 inside an optical cable 700 passes through the rear housing 200, then enters into the front housing 100, and then passes through the front housing 100 and is connected to the adapter. In the present embodiment, the front housing 100 and the rear housing 200 are detachably connected. Furthermore, the front-housing front end 110 is designed to be matched with the structure of the adapter. In the present embodiment, the front-housing front end 110 is designed to be matched with the outer-square and inner-circular structure of a standard adapter, similar to a joint structure of a standard connector. The front-housing rear end 120 is arranged with a first snap-fit structure 160, so that the front-housing rear end 120 can be snap-fitted on the rear housing 200 through the first snap-fit structure 160. In the present embodiment, the first snap-fit structure 160 is an internal thread, which is matched with a corresponding external thread on the rear housing 200 to realize a detachable connection between the front housing 100 and the rear housing 200. Optionally, the first snap-fit structure 160 can also be other fastening structures, such as mortise and tenon structures, snap protruding structures, and spiral snap-in structures, so as to be matched with a corresponding structure on the rear housing 200 to realize the detachable connection between the front housing 100 and the rear housing 200.

Furthermore, as shown in FIG.4 and FIG. 5, in the present embodiment, the front-housing front end 110 extends axially to form a positioning flat surface 130 to assist in positioning the structure of the compact optical fiber connector relative to the adapter. Optionally, the positioning flat surface 130 corresponds to an "upper surface" of the adapter. When installing the compact optical fiber connector and the adapter, rotating the positioning flat surface 130 upwards can directly realize a corresponding connection between the compact optical fiber connector and the adapter, reducing installation difficulty and facilitating the installation of multiple optical fiber connectors in a narrow space. Furthermore, as shown in FIG. 6 and FIG. 7, at least one fastening protrusion 140 is respectively arranged on two sides of the positioning flat surface 130 in the present embodiment. The fastening protrusions 140 are protrudingly arranged away from a side wall of the front housing 100, so as to fasten the compact optical fiber connector to the adapter when connecting the compact optical fiber connector to the adapter, realizing a fixed connection between the compact optical fiber connector and the adapter, and ensuring a connection between the optical fiber 710 and the adapter.

Furthermore, as shown in FIG. 3, in the present embodiment, the front-housing front end 110 is arranged with an annular snap-fit protrusion 150 inside the front-housing front end 110, and a through hole with a smaller size is formed in a middle of the annular snap-fit protrusion 150. After the front housing 100 is fixedly connected to the rear housing 200, the annular snap-fit protrusion 150 cooperates with the rear housing 200 to fix the ferrule component 300 between the front housing 100 and the rear housing 200.

As shown in FIG. 3 and FIG. 8, the rear housing 200 is a hollow housing structure having a rear-housing front end 210 and a rear-housing rear end 220. The rear-housing front end 210 is detachably connected to the front housing 100, and the rear-housing rear end 220 is fixedly connected to the optical cable 700 to ensure that the optical fiber 710 passes through the rear-housing rear end 220 and the rear-housing front end 210 in sequence and then enters into the front housing 100, and is connected to the adapter through the front housing 100. In the present embodiment, the rear-housing front end 210 and the rear-housing rear end 220 are hollow cylindrical structures, and a diameter of the rear-housing front end 210 is smaller than a diameter of the rear-housing rear end 220, so as to ensure that the rear-housing front end 210 can extend into the front housing 100 through the front-housing rear end 120, and the rear-housing rear end 220 abuts against the front-housing rear end 120.

Furthermore, as shown in FIG. 8 and FIG. 9, one end of the rear-housing front end 210 close to the rear-housing rear end 220 is arranged with a second snap-fit structure 260. After the rear-housing front end 210 extends into the front housing 100, the second snap-fit structure 260 is matched with the first snap-fit structure 160 to realize the detachable connection between the front housing 100 and the rear housing 200. In the present embodiment, the second snap-fit structure 260 is an external thread, which is matched with the first snap-fit structure 160 as an internal thread to realize the detachable connection between the front housing 100 and the rear housing 200. Optionally, the second snap-fit structure 260 can also be other fastening structures, such as mortise and tenon structures, snap protruding structures, and spiral snap-in structures. The second snap-fit structure 260 is matched with the first snap-fit structure 160 to realize the detachable connection between the front housing 100 and the rear housing 200.

Furthermore, as shown in FIG. 8 and FIG. 9, in the present embodiment, an outer wall of one end of the rear-housing rear end 220 close to the rear-housing front end 210 is surrounded by at least one annular groove 230, and the annular groove 230 is configured to accommodate a waterproof ring 240. As shown in FIG. 2 and FIG. 3, the waterproof ring 240 is sleeved on and inside the annular groove 230 and protrudes from a surface of the rear-housing rear end 220. That is, after the waterproof ring 240 is sleeved on the rear housing 200, a height of the waterproof ring 240 is greater than a height of the annular groove 230, so that the waterproof ring 240 forms a protrusion relative to the annular groove 230. In this way, when the compact optical fiber connector is not in use, the waterproof ring 240 can cooperate with a first dust cover 500 to achieve the sealing of the compact optical fiber connector and improve waterproof and dustproof performance. After inserting the compact optical fiber connector into the adapter, the waterproof ring 240 can also abut against a housing of the adapter to achieve the waterproof function of the compact optical fiber connector.

Furthermore, as shown in FIG. 4 and FIG. 5, in the present embodiment, one end of the rear-housing rear end 220 away from the rear-housing front end 210 is arranged with a fastening portion 250. The fastening portion 250 includes multiple annular protrusions with different heights to be fixedly connected with the crimping tube 400. One end of the crimping tube 400 is sleeved on the fastening portion 250 and fixed under pressure, and the other end of the crimping tube 400 is sleeved on the optical cable 700 and fixed under pressure, thereby achieving a fixed connection between the optical cable 700 and the rear housing 200, and ensuring that the optical fiber 710 can smoothly pass through both the rear housing 200 and the front housing 100 and then be connected to the adapter. The crimping tube 400 can fix a reinforcing component (such as aramid yarns) of the optical cable 700 at the rear-housing rear end 220 of the rear housing 200 by mechanical crimping, thereby ensuring mechanical strength and sealing, preventing a tensile force from affecting the connection between the optical fiber 710 and the adapter, reducing installation risks, improving installation stability, and ensuring a sealing effect on the compact optical fiber connector.

Furthermore, as shown in FIG. 8 and FIG. 9, an outer side wall of the rear-housing rear end 220 in the present embodiment is arranged with a third snap-fit structure 270 to be matched with with the first dust cover 500 to realize a detachable connection between the first dust cover 500 and the rear housing 200. In the present embodiment, the third snap-fit structure 270 is an external thread to be matched with a corresponding internal thread structure on the first dust cover 500 to realize the detachable connection between the first dust cover 500 and the rear housing 200. Optionally, the third snap-fit structure 270 can also be other fastening structures, such as mortise and tenon structures, snap protruding structures, and spiral snap-in structures, to be matched with a corresponding structure on the first dust cover 500 to realize the detachable connection between the first dust cover 500 and the rear housing 200.

As shown in FIG. 4 and FIG. 5, the ferrule component 300 includes a ferrule 310, a convex stage 320, and an elastic member 330. Furthermore, one end of the ferrule 310 extends out of the front-housing front end 110 to be connected with the adapter, and the other end of the ferrule 310 extends into the rear-housing front end 210 to be connected to the optical fiber 710. A through hole is axially formed inside the ferrule 310 and configured for the optical fiber 710 to pass through the through hole, so that the optical fiber 710 is connected with the adapter, thereby achieving the function of optical-fiber connections. Furthermore, in the present embodiment, the convex stage 320 is arranged around the ferrule 310 and is located at a relative middle position of the ferrule 310. After assembling and connecting the front housing 100 and the rear housing 200, one side of the convex stage 320 abuts against the annular snap-fit protrusion 150 inside the front housing 100, and the other side of the convex stage 320 abuts against the rear-housing front end 210 through the elastic member 330, thereby fixing the ferrule component 300 between the front housing 100 and the rear housing 200. By setting the elastic member 330, which abuts against between the annular snap-fit protrusion 150 and the rear-housing front end 210, a force is throughout provided for the ferrule 310 to extend towards the front-housing front end 110, ensuring that the ferrule 310 extends out of the front housing 100 and is connected to the adapter. At the same time, the elastic member 330 ensures that the ferrule 310 is in an elastic connection within the compact optical fiber connector, avoiding damage to the ferrule 310 caused by rigid collision during assembly or connection between the compact optical fiber connector and the adapter. Optionally, the elastic member 330 is a spring.

As shown in FIG. 1 and FIG. 4, the first dust cover 500 in the present embodiment is a cylindrical structure with a circular bottom, which wraps the front housing 100 and the rear housing 200 after being snap-fitted on the rear housing 200, achieving the sealing of the compact optical fiber connector. An inner diameter of the first dust cover 500 is slightly smaller than an outer diameter of the waterproof ring 240, so as to achieve the sealing from the position of the waterproof ring 240 on the rear housing 200 to the position of a top end of the front housing 100 after the first dust cover 500 is snap-fitted on the rear housing 200, thereby improving the sealing performance of the compact optical fiber connector. Furthermore, as shown in FIG. 5, in the present embodiment, a fourth snap-fit structure 520 is arranged on the first dust cover 500 corresponding to the third snap-fit structure 270 of the rear housing 200 to realize the detachable connection between the first dust cover 500 and the rear housing 200. In the present embodiment, the fourth snap-fit structure 520 is an internal thread, which is matched with the third snap-fit structure 270 in the form of an external thread on the rear housing 200 to fix the first dust cover 500. Optionally, the fourth snap-fit structure 520 can also be other fastening structures, such as mortise and tenon structures, snap protruding structures, and spiral snap-in structures, to be matched with the corresponding third snap-fit structure 270 on the rear housing 200 to realize the detachable connection between the first dust cover 500 and the rear housing 200.

Furthermore, as shown in FIG. 4, a top end of the first dust cover 500 is arranged with a push-pull through hole 510, and users can install or remove the first dust cover 500 through the push-pull through hole 510. After connecting the first dust cover 500 to the rear housing 200, the compact optical fiber connector can be moved through the push-pull through hole 510.

Furthermore, as shown in FIG. 3 and FIG. 4, in the present embodiment, the second dust cover 600 is arranged corresponding to the one end of the ferrule 310 extending out of the front housing 100, an outer diameter of the second dust cover 600 is smaller than an inner diameter of the front-housing front end 110, and an inner diameter of the second dust cover 600 is larger than an outer diameter of the ferrule 310 extending out of the front housing 100. Therefore, in the present embodiment, the second dust cover 600 can be sleeved on the ferrule 310 and extend into the front housing 100 to improve the waterproof and dustproof effects on the ferrule component 300. Optionally, one end of the second dust cover 600 away from the ferrule 310 is arranged with an annular protrusion to facilitate users to install or remove the second dust cover 600.

In this way, the present disclosure achieves overall construction of the compact optical fiber connector using the simple structure by setting the front housing 100, the rear housing 200, the ferrule component 300, the crimping tube 400, the first dust cover 500, the second dust cover 600, and the waterproof ring 240 that is sleeved on the rear housing 200, and ensures the sealing effect on the ferrule component 300 in the compact optical fiber connector. This not only reduces installation difficulty but also ensures waterproof and dustproof functions, effectively solving the technical problem that the optical fiber connectors in the prior art cannot simultaneously achieve volume reduction, installation difficulty reduction, and dustproof and waterproof functions.

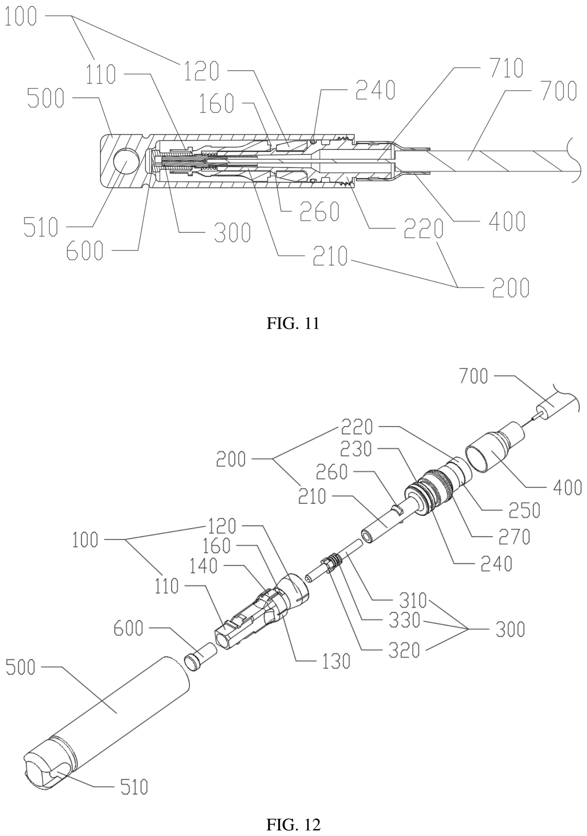

In another embodiment, the front housing and rear housing of the compact optical fiber connector described in the present disclosure are non-detachably connected. As shown in FIG. 12, the compact optical fiber connector includes a front housing 100, a rear housing 200, a ferrule component 300, a crimping tube 400, a first dust cover 500, and a second dust cover 600. As shown in FIG. 10 and FIG. 11, the structural arrangement of the compact optical fiber connector in the present embodiment is similar to the structural arrangement of the previous embodiment, but their methods for connecting the front housing 100 and the rear housing 200 are designed differently, making the front housing 100 and the rear housing 200 non-detachably connected.

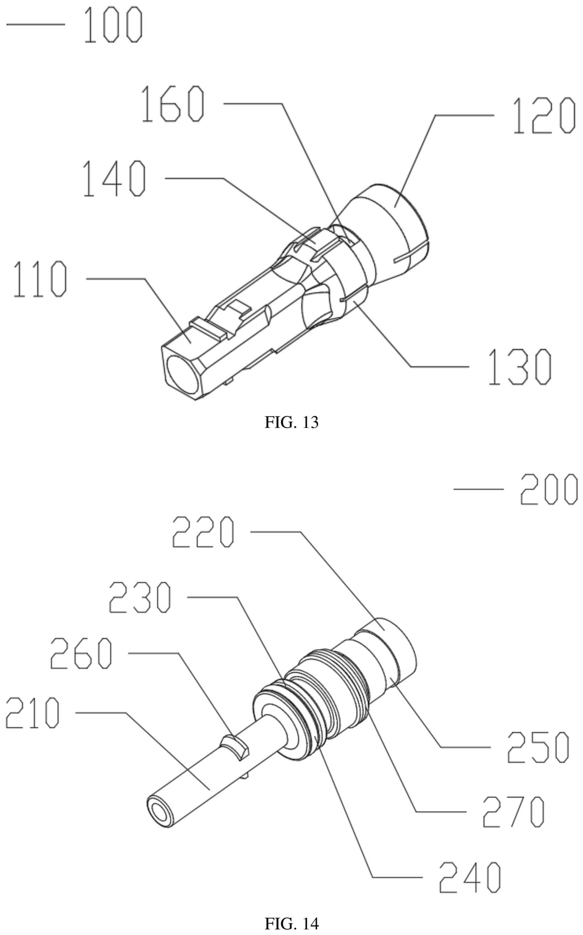

As shown in FIG. 12 and FIG. 13, the front housing 100 is a hollow housing structure having a front-housing front end 110 and a front-housing rear end 120. An optical fiber 710 in an optical cable 700 passes through the rear housing 200, then enters into the front housing 100, and passes through the front housing 100 and then is connected to the adapter. In the present embodiment, the front housing 100 and the rear housing 200 are non-detachably connected. Furthermore, the front-housing front end 110 is designed to be matched with the structure of the adapter. In the present embodiment, the front-housing front end 110 is designed to be matched with the outer-square and inner-circular structure of a standard adapter, similar to a joint structure of a standard connector. The front-housing rear end 120 is arranged with a first snap-fit structure 160, so that the front-housing rear end 120 can be snap-fitted on the rear housing 200 through the first snap-fit structure 160. In the present embodiment, the first snap-fit structure 160 is a through hole that penetrates a side wall of the front housing 100, so as to be matched with a corresponding snap-fit structure on the rear housing 200 to realize a non-detachable connection between the front housing 100 and the rear housing 200. Optionally, the first snap-fit structure 160 can also be other fastening structures, such as mortise and tenon structures and locking structures, to be matched with a corresponding structure on the rear housing 200 to realize the non-detachable connection between the front housing 100 and the rear housing 200.

As shown in FIG. 12 and FIG. 14, the rear housing 200 is a hollow housing structure having a rear-housing front end 210 and a rear-housing rear end 220. The rear-housing front end 210 is non-detachably connected to the front housing 100, and the rear-housing rear end 220 is fixedly connected to the optical cable 700 to ensure that the optical fiber 710 passes through the rear-housing rear end 220 and the rear-housing front end 210 in sequence, then enters into the front housing 100, and passes through the front housing 100 and then is connected to the adapter. Furthermore, as shown in FIG. 11 and FIG. 14, one end of the rear-housing front end 210 close to the rear-housing rear end 220 is arranged with a second snap-fit structure 260. After the rear-housing front end 210 extends into the front housing 100, the second snap-fit structure 260 is matched with the first snap-fit structure 160 to realize a non-detachable connection between the front housing 100 and the rear housing 200. In the present embodiment, the second snap-fit structure 260 is a protruding block perpendicular to the rear housing 200. After inserting the rear-housing front end 210 into the front housing 100, the second snap-fit structure 260 extends out of the first snap-fit structure 160 that penetrates the front housing 100 and is snap-fitted on the first snap-fit structure 160, thereby achieving the non-detachable connection between the front housing 100 and the rear housing 200. Optionally, the second snap-fit structure 260 can also be other fastening structures, such as mortise and tenon structures and locking structures, to be matched with the first snap-fit structure 160 to realize the non-detachable connection between the front housing 100 and the rear housing 200.

In the present embodiment, as shown in FIG. 10 and FIG. 11, after connecting the front housing 100 to the rear housing 200, the second snap-fit structure 260 is fixedly snap-fitted on the first snap-fit structure 160, thereby achieving the non-detachable connection between the front housing 100 and the rear housing 200. At the same time, the first dust cover 500, the second dust cover 600, and the waterproof ring 240 that is sleeved on the rear housing 200 are combined to ensure the sealing effect on the ferrule component 300 inside the compact optical fiber connector. This not only reduces the installation difficulty but also ensures the waterproof and dustproof functions, effectively solving the problem that the optical fiber connectors in the prior art cannot simultaneously achieve volume reduction, installation difficulty reduction, and dustproof and waterproof functions.

In summary, the present disclosure provides a compact optical fiber connector, including a front housing, a rear housing, and a ferrule component, where an outer wall of the front housing extends axially to form a positioning flat surface to assist in positioning direction when the compact optical fiber connector is connected to an adapter. A rear-housing front end of the rear housing extends into the front housing and is detachably connected to the front housing. A rear-housing rear end of the rear housing is fastened to an optical cable and allows an optical fiber inside the optical cable to pass through the rear-housing rear end. The ferrule component is fixed between the front housing and the rear housing, with one end of the ferrule component extending out of the front housing to be connected to the adapter, and the other end of the ferrule component extending into the rear housing to be connected to the optical fiber. The present disclosure reduces the footprint by reducing structural components and using the front housing and the rear housing to form the optical fiber connector. The positioning flat surface is arranged on the front housing to reduce the installation difficulty. Finally, the ferrule component is fixed inside the front housing and the rear housing to prevent dust or water droplets from entering into the compact optical fiber connector, thereby synchronously achieving the effects of reducing volume, reducing installation difficulty, and ensuring dustproof and waterproof functions.

The above is only some embodiments of the present disclosure and is not intended to limit the present disclosure. Any modifications, equivalent substitutions, improvements, etc. made within the spirits and principles of the present disclosure should be included in the protection scope of the present disclosure.

## Claims

1. A compact optical fiber connector, comprising:
a front housing, wherein an outer wall of the front housing extends axially to form a positioning flat surface to assist in positioning direction when the compact optical fiber connector is connected to an adapter;
a rear housing, wherein a rear-housing front end of the rear housing extends into the front housing and is connected to the front housing, and a rear-housing rear end of the rear housing is fastened to an optical cable and allows an optical fiber inside the optical cable to pass through the rear-housing rear end; and
a ferrule component, fixed between the front housing and the rear housing, wherein one end of the ferrule component extends out of the front housing to be connected to the adapter, and an other end of the ferrule component extends into the rear housing to be connected to the optical fiber.

2. The compact optical fiber connector according to claim 1, wherein the front housing comprises:
a front-housing front end, matched with and fastened to the adapter to realize a connection between the compact optical fiber connector and the adapter, wherein the positioning flat surface is arranged at one side of the front-housing front end; and
a front-housing rear end, matched with the rear-housing front end of the rear housing,
so that the rear-housing front end extends into the front-housing rear end to realize a detachable connection between the rear housing and the front housing.

3. The compact optical fiber connector according to claim 2, wherein an annular snap-fit protrusion is arranged inside the front-housing front end, and after the front housing and the rear housing are detachably connected, the ferrule component is fixed between the annular snap-fit protrusion and the rear-housing front end.

4. The compact optical fiber connector according to claim 2, wherein at least one fastening protrusion is arranged on a side wall of the front-housing front end surrounding the front-housing front end to realize matching and fastening between the front-housing front end and the adapter.

5. The compact optical fiber connector according to claim 1, wherein the rear-housing rear end comprises:
an annular groove, arranged around an outer wall of the rear-housing rear end, wherein
a waterproof ring is sleeved inside the annular groove; and
a fastening portion, arranged at an end part of the rear-housing rear end away from the rear-housing front end to realize a fastening connection between the fastening portion and the optical cable.

6. The compact optical fiber connector according to claim 5, further comprising:
a crimping tube, wherein one end of the crimping tube is fixedly sleeved on the fastening portion, and an other end of the crimping tube is clamped on the optical cable to ensure a fixed connection between the optical cable and the compact optical fiber connector.

7. The compact optical fiber connector according to claim 5, further comprising:
a first dust cover, detachably connected to the rear housing, and wrapping the front housing and the rear housing, wherein an inner wall of the first dust cover is matched with the waterproof ring to prevent dust or water from entering into the compact optical fiber connector after the first dust cover is connected to the rear housing.

8. The compact optical fiber connector according to claim 7, wherein the first dust cover is arranged with a push-pull through hole configured for movement of the compact optical fiber connector and assembly and disassembly of the first dust cover.

9. The compact optical fiber connector according to claim 1, wherein the ferrule component comprises:
a ferrule, wherein one end of the ferrule extends out of the front housing to be connected to the adapter, and an other end of the ferrule extends into the rear housing to be connected to the optical fiber, and the optical fiber is connected to the adapter through the ferrule;
a convex stage, arranged around the ferrule, wherein one side of the convex stage abuts against the front housing; and
an elastic member, wherein one end of the elastic member abuts against an other side of the convex stage, and an other end of the elastic member abuts against the rear housing, so as to ensure that the ferrule component is fixed between the front housing and the rear housing, and avoid damage to the ferrule caused by collision between the ferrule and the adapter.

10. The compact optical fiber connector according to claim 1, further comprising:
a second dust cover, arranged corresponding to the one end of the ferrule component extending out of the front housing, and detachably sleeved on the ferrule component to prevent dust from falling into the ferrule component.
